# DEMANDE DE BREVET EUROPEEN

(11) **EP 1 168 142 A1**
(43) Date de publication de la demande: **02.01.2002**
(21) Numéro de dépôt: 00810538.9
(22) Date de dépôt: 20.06.2000
(51) Int. Cl.: G06F 1/16

(54) **Appareil électronique portable**

(71) Demandeur: Smartdata SA, 1920 Martigny (CH)
(72) Inventeur: Buttet, Jean-Pierre, 1920 Martigny (CH)
(74) Mandataire: BOVARD AG - Patentanwälte

(57) **Abrégé**

Appareil électronique portable (1) comprenant au moins un écran (2) d'affichage d'informations et un dispositif (3) de sélection d'informations affichées sur cet écran (2) au moyen d'un pointeur (2A) affiché à cet effet sur l'écran, ledit appareil (1) étant contenu dans un boîtier (4) comprenant plusieurs faces (5 à 10) dont au moins une face (5) dans laquelle l'écran (2) d'affichage est situé, le dispositif de sélection (3) étant quant à lui de type comprenant,
- un circuit calculateur (3A) imposant la position du pointeur (2A) en fonction de signaux de commande qui lui sont adressés,
- un organe de commande (3B), d'une part, sur lequel un utilisateur de l'appareil (1) peut exercer au moins une action digitale afin de commander au moins l'une des fonctions que sont l'affichage du pointeur (2A) et le déplacement dudit pointeur (2A), notamment, en vue de venir le placer en coïncidence avec une information à sélectionner sur l'écran (2), et d'autre part, qui élabore des signaux de commande et les délivre au circuit calculateur (3A),
cet appareil étant caractérisé en ce que l'organe (3B) de commande du dispositif (3) de sélection d'informations est positionné dans le boîtier (4) de manière à être actionnable depuis au moins une face (6 à 10) distincte de la face (5) dans laquelle l'écran (2) d'affichage d'informations est situé.

## Description

L'invention se rapporte à un appareil électronique portable comprenant un écran d'affichage d'informations et un dispositif de sélection d'informations affichées sur cet écran, au moyen d'un pointeur affiché à cet effet sur l'écran.

L'invention concerne plus particulièrement, mais non exclusivement, un appareil de poche, c'est à dire un appareil logé dans un boîtier qui peut être tenu ou supporté par une personne au moyen d'une seule main.

Par exemple, l'appareil est un téléphone portable, voire un agenda électronique de poche.

Le dispositif de sélection est de type comprenant,
- un circuit calculateur imposant la position du pointeur en fonction de signaux de commande qui lui sont adressés,
- un organe de commande, d'une part, sur lequel l'utilisateur de l'appareil peut exercer au moins une action digitale afin de commander au moins l'une des fonctions que sont l'affichage et le déplacement dudit pointeur dans deux directions sécantes, notamment, en vue de venir le placer en coïncidence avec une information à sélectionner sur l'écran, et d'autre part, qui élabore des signaux et les délivre au circuit calculateur.

Pour permettre la sélection d'informations affichées par un écran, il est classique qu'un appareil de taille réduite comprenant un tel écran ne comporte pas d'organe de commande qui soit séparé du boîtier, tel une souris, mais un organe de commande qui est intégré à son boîtier.

C'est ainsi que sur ce type d'appareil de taille réduite, l'organe de commande consiste parfois en un ensemble de touches de déplacement du pointeur affiché sur l'écran.

En général quatre touches, haut-bas, gauche-droite, sont nécessaires pour commander les déplacements d'un pointeur dans deux directions sécantes.

L'usage de ces touches s'avère peu pratique.

En général, les utilisateurs d'appareil portables préfèrent que l'appareil soit équipé d'un écran tactile, c'est à dire d'un écran dont la surface supérieure porte un organe de commande consistant en un élément transparent sensible à l'action locale d'un doigt ou d'un stylet.

Cependant, l'usage de ces écrans engendre des inconvénients, tel l'altération de l'affichage par la présence de traces de doigts, le masquage d'informations lors de la sélection, l'usage virtuellement obligatoire de deux mains pour une utilisation correcte de l'appareil.

Un résultat que l'invention vise à obtenir est un appareil qui vise à remédier à l'ensemble des inconvénients précités.

A cet effet, l'invention a pour objet un appareil électronique portable comprenant au moins un écran d'affichage d'informations et un dispositif de sélection d'informations affichées sur cet écran, cet appareil étant contenu dans un boîtier comprenant au moins une face dans laquelle l'écran d'affichage se situe.

L'appareil est notamment caractérisé en ce que l'organe de commande du dispositif de sélection d'informations est positionné dans son boîtier de manière à être actionnable depuis au moins une face distincte de la face dans laquelle l'écran d'affichage d'informations est situé.

L'invention sera bien comprise à la lecture de la description ci-après faite à titre d'exemple non limitatif en regard des figures de dessin ci-annexées qui représentent schématiquement :
Figures 1 et 2 : une vue de face et une vue dorsale d'un appareil selon l'invention, dans un mode de réalisation,
Figures 3 et 4 : une vue de face et une vue dorsale d'un appareil selon l'invention, selon une variante de réalisation,
Figure 5 : une vue de face et partiellement arrachée d'un appareil selon l'invention, dans un autre mode de réalisation.

En se reportant aux figures de dessin, on voit un appareil électronique portable 1 comprenant au moins un écran 2 d'affichage d'informations et un dispositif 3 de sélection d'informations affichées sur cet écran 2 au moyen d'un pointeur 2A affiché à cet effet sur l'écran.

L'appareil 1 est contenu dans un boîtier 4 comprenant plusieurs faces 5 à 10 dont au moins une face 5 dans laquelle l'écran 2 d'affichage est situé.

Les faces 5 à 10 du boîtier 4 ont été représentées comme étant sensiblement planes, mais cela n'a pas de caractère limitatif pour l'invention.

L'indication selon laquelle l'écran d'affichage est situé dans une face signifie que l'écran peut être observé depuis cette face.

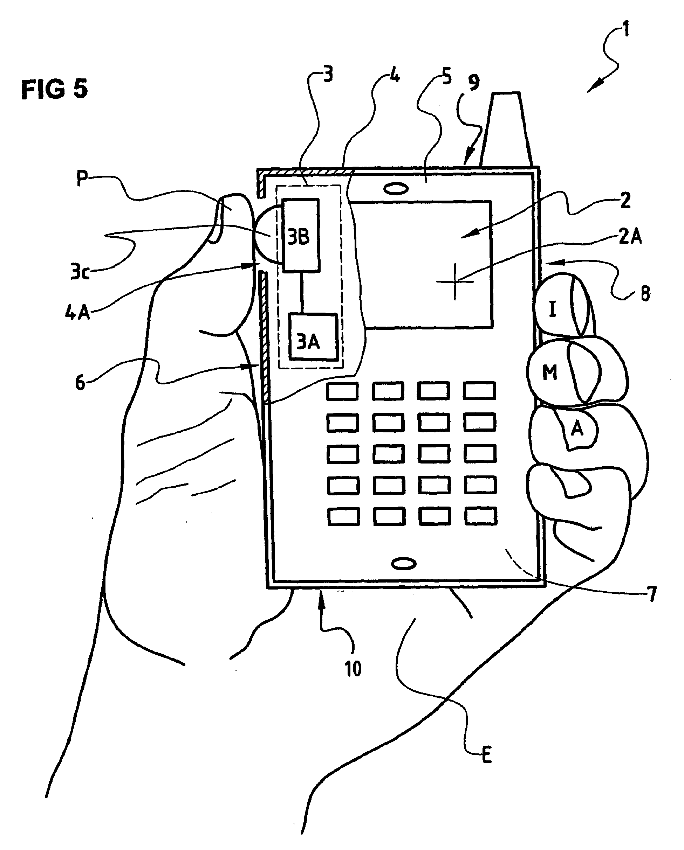

Le dispositif de sélection 3 est de type comprenant (figure 5),
- un circuit calculateur 3A imposant la position du pointeur 2A en fonction de signaux de commande qui lui sont adressés,
- un organe de commande 3B, d'une part, sur lequel l'utilisateur de l'appareil 1 peut exercer au moins une action digitale afin de commander au moins l'une des fonctions que sont l'affichage du pointeur 2A et le déplacement dudit pointeur 2A dans deux directions sécantes, notamment, en vue de venir le placer en coïncidence avec une information à sélectionner sur l'écran 2, et d'autre part, qui élabore des signaux de commande et les délivre au circuit calculateur 3A.

Par organe 3B de commande, on désigne non limitativement :
- l'élément sensible ou tablette tactile connue sous le nom de "touchpad", ou
- la boule d'un dispositif connu sous le nom de "souris" ou de "track-ball", voire
- un court levier fonctionnant à la manière d'une manette connue sous le nom de "joystick", ou encore
- une touche montée oscillante et sensible à des actions orientées dans différentes directions.

Selon une caractéristique technique remarquable, l'organe 3B de commande du dispositif 3 de sélection d'informations est positionné dans le boîtier 4 de manière à être actionnable depuis au moins une face 6 à 10 distincte de la face 5 dans laquelle l'écran 2 d'affichage d'informations est situé.

Cette structure de dispositif permet donc de commander l'affichage et les déplacements du pointeur 2A par action digitale depuis une face 6 à 10 du boîtier 4 de l'appareil 1 qui est distincte de celle 5 comprenant l'écran d'affichage 2, ce qui permet d'obtenir le résultat visé par l'invention.

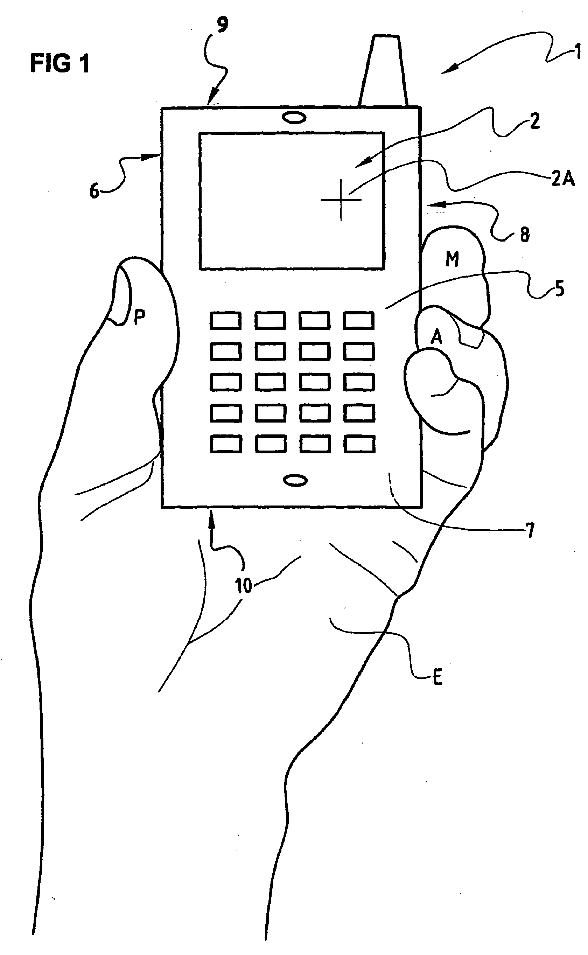

Précisément, l'organe 3B de commande du dispositif 3 de sélection d'informations est positionné dans le boîtier 4 de l'appareil 1 de manière à être actionnable depuis au moins l'une 6 à 10 des faces que sont une face 6, 8, 9, 10 située latéralement à celle 5 contenant l'écran 2 d'affichage d'informations et une face 7 opposée à cette dernière 5 (figures 1 à 5).

Dans une forme de réalisation (figure 5), l'organe 3B de commande du dispositif 3 de sélection d'informations est positionné dans le boîtier 4 de l'appareil 1 de manière à être actionnable depuis une face 6, 8 à 10 située latéralement à celle 5 contenant l'écran 2 d'affichage d'informations.

Dans une forme de réalisation (figure 5) :
- d'une part, le boîtier comprend au moins trois faces 5 à 10 parmi lesquelles,
   . une face 5 dite frontale dans laquelle l'écran 2 d'affichage est situé et une face 7 dorsale opposée,
   . au moins une face 6, 8 à 10 latérale qui s'étend entre les deux faces 5, 7 opposées, et
- d'autre part, l'organe 3B de commande du dispositif 3 de sélection d'informations est positionné dans le boîtier 4 de l'appareil 1 de manière à être actionnable depuis une face latérale 6 à 10.

Cette configuration permet que, lorsque l'appareil électronique 1 repose par sa face dorsale 7 contre la paume E d'une main d'un utilisateur, dans la mesure où l'appareil 1 est correctement orienté, le gras du pouce P de l'utilisateur peut exercer son action sur l'organe 3B de commande du dispositif de sélection 3 d'informations qui est latéralement situé.

Selon une forme préférée de réalisation (figures 1 à 4), l'organe 3B de commande du dispositif 3 de sélection d'informations est positionné dans le boîtier 4 de l'appareil 1 de manière à être actionnable depuis une face 7 opposée à celle 5 contenant l'écran 2 d'affichage d'informations.

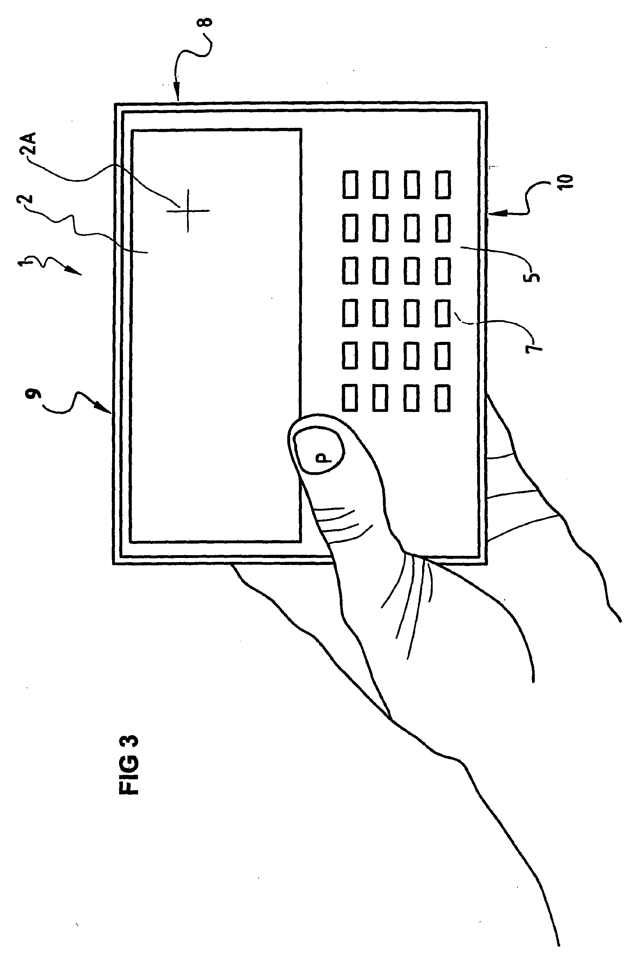

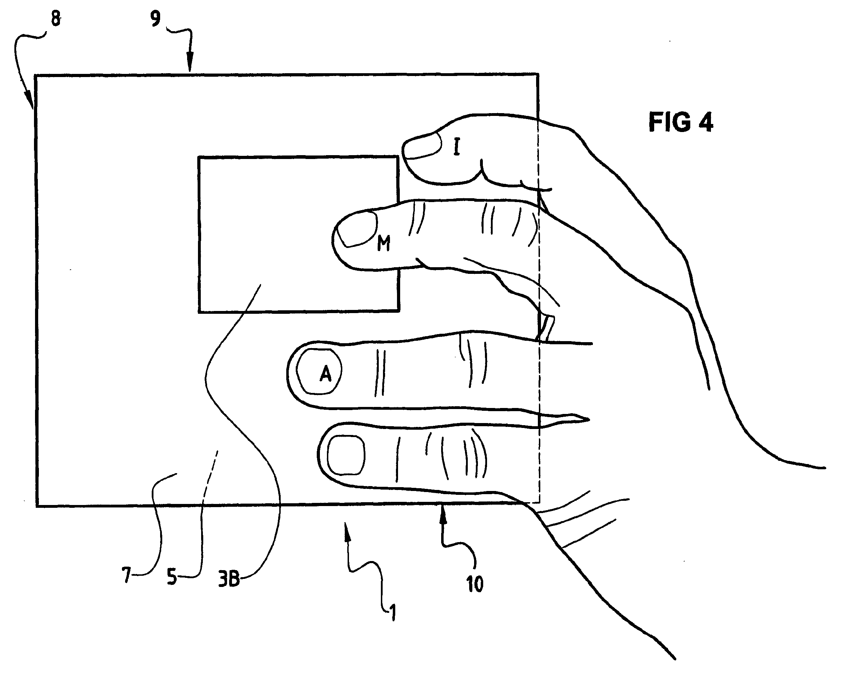

Dans une première variante de cette forme de réalisation (figures 3 et 4):
- d'une part, le boîtier 4 de l'appareil 1 est substantiellement plat, c'est à dire qu'il comprend essentiellement deux faces 5, 7 dont une face dite frontale 5 dans laquelle l'écran 2 s'inscrit et une face dorsale 7 opposée, lesquelles sont d'étendue notable par rapport à des faces latérales qui les délimitent, et
- d'autre part, l'organe 3B de commande du dispositif 3 de sélection d'informations est positionné dans le boîtier 4 de l'appareil 1 de manière à être actionnable depuis la face dorsale 7.

En figures 3 et 4, on peut constater que cette configuration permet que lorsque l'appareil 1 est, par ses faces frontale 5 et dorsale 7, pincé entre, d'une part, le pouce P et, d'autre part, l'index I ainsi que l'annulaire A, l'extrémité du majeur M peut être déplacée sur au moins une fraction de la face dorsale 7 équipée de l'organe 3B de commande et donc utilisée pour actionner cet organe 3B.

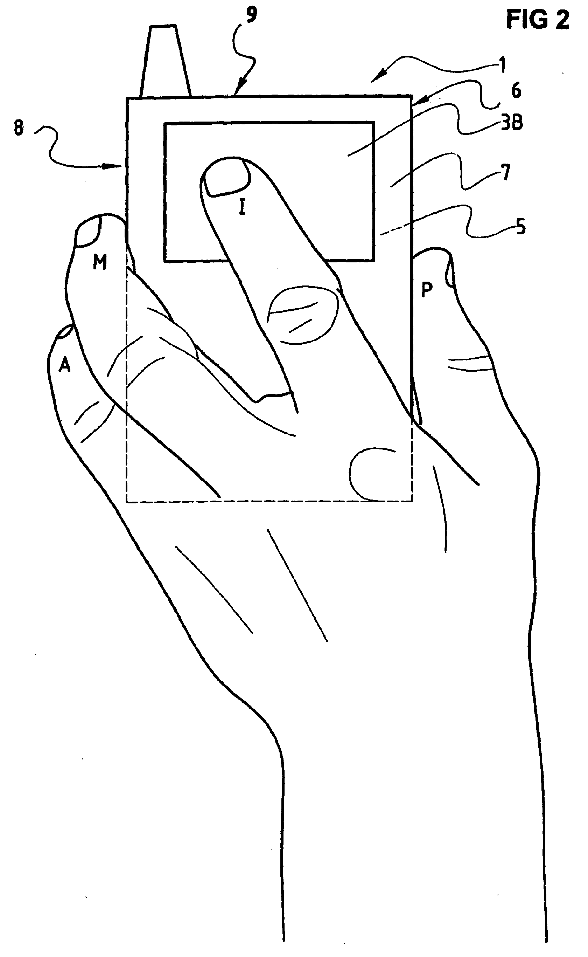

Dans une deuxième variante (figures 1 et 2) :
- d'une part, le boîtier 4 de l'appareil 1 comprend, au moins quatre faces 5 à 10 dont,
   . une face dite frontale 5 dans laquelle l'écran s'inscrit et une face dorsale 7 opposée,
   . deux faces latérales opposées 6 et 8 ou 9 et 10 situées dans des plans sensiblement perpendiculaires aux faces dites frontale 5 et dorsale 7, et
- d'autre part, l'organe 3B de commande du dispositif 3 de sélection d'informations est positionné dans le boîtier 4 de l'appareil 1 de manière à être actionnable depuis la face dorsale 7.

En figures 1 et 2, on peut constater que cette configuration permet que, lorsque l'appareil électronique 1 repose par sa face dorsale 7 contre la paume E d'une main d'un utilisateur, et ce, de manière telle qu'il soit par des faces latérales 6, 8, pincé entre, d'une part, le pouce P et, d'autre part, notamment, le majeur M et l'annulaire A, l'extrémité de l'index I de l'utilisateur peut être déplacée sur au moins une fraction de la face dorsale 7 équipée de l'organe de commande 3B et donc utilisée pour actionner cet organe 3B.

Dans une variante de réalisation, l'organe de commande 3B comprend une surface sensible au contact digital, cet organe étant constitué à la manière d'un élément sensible capable de détecter la position et les mouvements d'un doigt qui est placé à son contact. La surface sensible est par exemple sensiblement plane.

Lorsqu'un doigt est en contact avec la surface sensible 3B, son déplacement est imposé au pointeur 2A qui se déplace alors solidairement dudit doigt.

De manière notable, le circuit calculateur 3A qui reçoit les signaux de commande adressés par l'organe de commande 3B, induit le déplacement de l'affichage du pointeur 2A dès que le contact digital a été détecté sur la surface sensible et supprime ce déplacement lorsque le contact digital disparaît.

Dans une variante de réalisation, l'organe de commande 3B comprend, à la manière d'une souris d'ordinateur, une boule 3C logée dans le boîtier 4 de l'appareil 1 et dont une fraction de la surface apparaît au travers d'une découpe 4A prévue dans la paroi constitutive dudit boîtier 4 (figure 5).

Dans une variante de réalisation, l'organe de commande 3B consiste en un court levier associé à des capteurs de pression disposés de manière à détecter des actions de commande digitales dans au moins deux directions.

Dans une variante de réalisation, l'organe de commande 3B consiste en une touche montée oscillante et sensible à des actions orientées dans différentes directions.

De manière notable, l'organe de commande est de type sensible à des actions digitales de brève durée et le circuit calculateur 3A qui reçoit les signaux de commande adressés par l'organe de commande 3B, est de type interprétant chaque impulsion comme une action de confirmation du choix d'une information pointée.

## Revendications

1. Appareil électronique portable (1) comprenant au moins un écran (2) d'affichage d'informations et un dispositif (3) de sélection d'informations affichées sur cet écran (2) au moyen d'un pointeur (2A) affiché à cet effet sur l'écran, ledit appareil (1) étant contenu dans un boîtier (4) comprenant plusieurs faces (5 à 10) dont au moins une face (5) dans laquelle l'écran (2) d'affichage est situé, le dispositif de sélection (3) étant quant à lui de type comprenant,
- un circuit calculateur (3A) imposant la position du pointeur (2A) en fonction de signaux de commande qui lui sont adressés,
- un organe de commande (3B), d'une part, sur lequel un utilisateur de l'appareil (1) peut exercer au moins une action digitale afin de commander au moins l'une des fonctions que sont l'affichage du pointeur (2A) et le déplacement dudit pointeur (2A), notamment, en vue de venir le placer en coïncidence avec une information à sélectionner sur l'écran (2), et d'autre part, qui élabore des signaux de commande et les délivre au circuit calculateur (3A),
cet appareil étant **caractérisé en ce que** l'organe (3B) de commande du dispositif (3) de sélection d'informations est positionné dans le boîtier (4) de manière à être actionnable depuis au moins une face (6 à 10) distincte de la face (5) dans laquelle l'écran (2) d'affichage d'informations est situé.

2. Appareil électronique portable (1) selon la revendication 1, **caractérisé en ce que** l'organe (3B) de commande du dispositif (3) de sélection d'informations est positionné dans le boîtier (4) de l'appareil (1) de manière à être actionnable depuis au moins l'une (6 à 10) des faces que sont une face (6 à 10) située latéralement à celle (5) contenant l'écran (2) d'affichage d'informations et une face (7) opposée à cette dernière (5).

3. Appareil électronique portable (1) selon l'une quelconque des revendications 1 ou 2, **caractérisé en ce que** l'organe (3B) de commande du dispositif (3) de sélection d'informations est positionné dans le boîtier (4) de l'appareil (1) de manière à être actionnable depuis une face (6, 8 à 10) située latéralement à celle (5) contenant l'écran 2 d'affichage d'informations.

4. Appareil électronique portable (1) selon la revendication 3, **caractérisé en ce que** :
- d'une part, le boîtier comprend au moins trois faces (5 à 10) parmi lesquelles,
. une face (5) dite frontale dans laquelle l'écran (2) d'affichage est situé et une face (7) dorsale opposée,
. au moins une face (6, 8 à 10) latérale qui s'étend entre les deux faces (5, 7) opposées, et
- d'autre part, l'organe (3B) de commande du dispositif (3) de sélection d'informations est positionné dans le boîtier (4) de l'appareil (1) de manière à être actionnable depuis une face latérale (6 à 10)

5. Appareil électronique portable (1) selon l'une quelconque des revendications 1 à 4, **caractérisé en ce que** l'organe (3B) de commande du dispositif (3) de sélection d'informations est positionné dans le boîtier (4) de l'appareil (1) de manière à être actionnable depuis une face (7) opposée à celle (5) contenant l'écran (2) d'affichage d'informations.

6. Appareil électronique portable (1) selon la revendication 5, **caractérisé en ce que** :
- d'une part, le boîtier (4) est substantiellement plat, c'est à dire qu'il comprend essentiellement deux faces (5, 7) dont une face dite frontale (5) dans laquelle l'écran (2) est situé et une face dorsale (7) opposée, lesquelles sont d'étendue notable par rapport à des faces latérales qui les délimitent, et
- d'autre part, l'organe (3B) de commande du dispositif (3) de sélection d'informations est positionné dans le boîtier (4) de l'appareil (1) de manière à être actionnable depuis la face dorsale (7).

7. Appareil électronique portable (1) selon la revendication 5, **caractérisé en ce que** :
- d'une part, le boîtier (4) comprend au moins quatre faces (5 à 10) dont,
. une face dite frontale (5) dans laquelle l'écran d'affichage (2) est situé et une face dorsale (7) opposée,
. deux faces latérales opposées (6 et 8 ou 9 et 10) situées dans des plans sensiblement perpendiculaires aux faces dites frontale (5) et dorsale (7),
- d'autre part, l'organe (3B) de commande du dispositif (3) de sélection d'informations est positionné dans le boîtier (4) de l'appareil (1) de manière à être actionnable depuis la face dorsale (7).

8. Appareil électronique portable (1) selon l'une quelconque des revendications 1 à 7, l'organe de commande (3B) comprend une surface sensible au contact digital, cet organe étant constitué à la manière d'un élément sensible capable de détecter la position et les mouvements d'un doigt qui est placé à son contact, de manière telle que le pointeur (2A) se déplace solidairement dudit doigt.

9. Appareil électronique portable (1) selon l'une quelconque des revendications 1 à 7, **caractérisé en ce que** l'organe de commande (3B) comprend, à la manière d'une souris d'ordinateur, une boule (3C) logée dans le boîtier (4) de l'appareil (1) et dont une fraction de la surface apparaît au travers d'une découpe (4A) prévue dans la paroi constitutive dudit boîtier (4).

10. Appareil électronique portable (1) selon l'une quelconque des revendications 1 à 7, **caractérisé en ce que** l'organe de commande (3B) consiste en un court levier associé à des capteurs de pression disposés de manière à détecter des actions de commande digitales dans au moins deux directions.

11. Appareil électronique portable (1) selon l'une quelconque des revendications 1 à 7, **caractérisé en ce que** l'organe de commande (3B) consiste en une touche montée oscillante et sensible à des actions orientées dans différentes directions.

12. Appareil électronique portable (1) selon la revendication 8, **caractérisé en ce que** le circuit calculateur (3A) qui reçoit les signaux de commande adressés par l'organe de commande (3B), induit le déplacement du pointeur (2A) dès que le contact digital a été détecté sur la surface sensible et supprime ce déplacement lorsque le contact digital disparaît.

13. Appareil électronique portable (1) selon l'une des revendications 1 à 12 **caractérisé en ce que** l'organe de commande est de type sensible à des actions digitales de brève durée et le circuit calculateur (3A) qui reçoit les signaux de commande adressés par l'organe de commande (3B), est de type interprétant chaque impulsion comme une action de confirmation du choix d'une information pointée.
